# EUROPÄISCHE PATENTSCHRIFT

(11) **EP 3 113 894 B1**
(45) Veröffentlichungstag und Bekanntmachung des Hinweises auf die Patenterteilung: **22.07.2020**
(21) Anmeldenummer: 15703504.9
(22) Anmeldetag: 27.01.2015
(51) Int. Cl.: B21K 25/00, B21J 15/02, B23D 61/02, F16B 5/04

(54) **WERKZEUGVORRICHTUNG MIT EINEM BAUTEIL ZUR HERSTELLUNG EINER FORMSCHLÜSSIGEN NIETVERBINDUNG**
TOOL ASSEMBLY WITH COMPONENT FOR ESTABLISHING A FORM-LOCKING RIVETED CONNECTION
ENSEMBLE OUTILLAGE AVEC COMPOSANT SERVANT À ÉTABLIR UN ASSEMBLAGE PAR RIVETAGE

(30) Priorität: 07.03.2014 DE 102014103048
(43) Veröffentlichungstag der Anmeldung: 11.01.2017
(73) Patentinhaber: C. & E. Fein GmbH, 73529 Schwäbisch Gmünd-Bargau (DE)
(72) Erfinder: BEK, Fabian, 73560 Böbingen (DE); KNECHT, Markus, 73635 Rudersberg (DE); WEBER, Thomas, 73650 Wintersbach (DE); MANN, Rainer, 73434 Aalen-Dewangen (DE)
(74) Vertreter: Roos, Michael
(86) Internationale Anmeldenummer: PCT/EP2015/051577
(87) Internationale Veröffentlichungsnummer: WO 2015/132019

(56) Entgegenhaltungen:
- EP-A1- 1 493 937
- CH-A- 101 462
- DE-A1- 3 216 357
- DE-U1-202007 003 364
- DE-U1-202011 052 282
- JP-A- 2003 280 475

## Beschreibung

Die Erfindung bezieht sich auf eine Werkzeugeinrichtung aufweisend ein Bauteil zur Herstellung einer formschlüssigen Nietverbindung eines Werkzeugs mit einem Werkzeugaufnahmeteil sowie ein Verfahren zur Herstellung einer formschlüssigen Nietverbindung eines Werkzeuges mit einem Werkzeugaufnahmeteil mittels des Bauteils.

Niete sind, wie aus dem Stand der Technik bekannt, plastisch verformbare, zylindrische Verbindungselemente, mit denen eine formschlüssige Verbindung zweier Bauteile hergestellt werden kann. Typischerweise weist ein Niet einen Nietschaft mit angearbeitetem Setzkopf auf.

Typische Nietmaterialien sind beispielsweise Stahl, Kupfer, Aluminiumlegierungen, Kunststoff und Titan.

In die zu verbindenden Bauteile wird üblicherweise ein Loch eingebracht werden, das einen etwas größeren Durchmesser als der Nietschaft hat. Der Niet wird durch das vorgebohrte oder vorgestanzte Loch durchgesteckt, derart dass der Setzkopf auf der einen Seite der zu verbindenden Werkstücke anliegt und derart dass der Nietschaft über das Loch hinaus steht.

Der Nietschaft wird durch Druck in die Breite verformt, sodass sich ein Schließkopf bildet und die Werkstücke fest miteinander verbunden werden. Der Druck kann plötzlich durch Schlag oder kontinuierlich z. B. durch eine hydraulische Presse aufgebracht werden.

Da dieser Vorgang sehr aufwendig ist, vor allem wenn eine Vielzahl Niete benötigt wird, wird die klassische Nietverbindung in technischen Anwendungen heute vielfach durch eine Schweißverbindung ersetzt. Genietet wird gewöhnlich nur noch dort, wo Schweißen nicht geeignet ist, wie zum Beispiel im Leichtbau oder bei nicht schweißbaren Materialien.

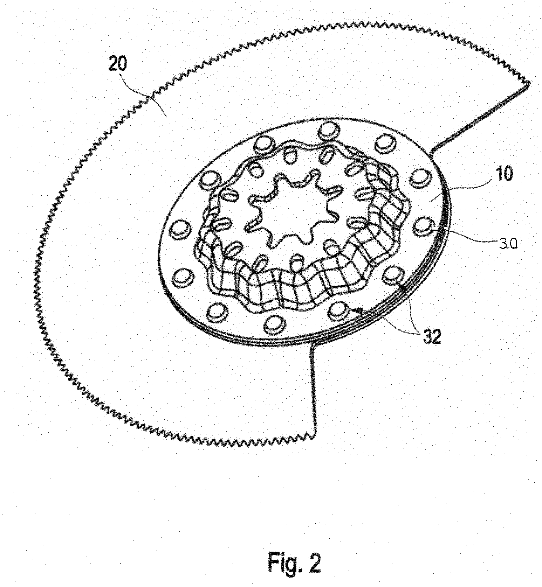

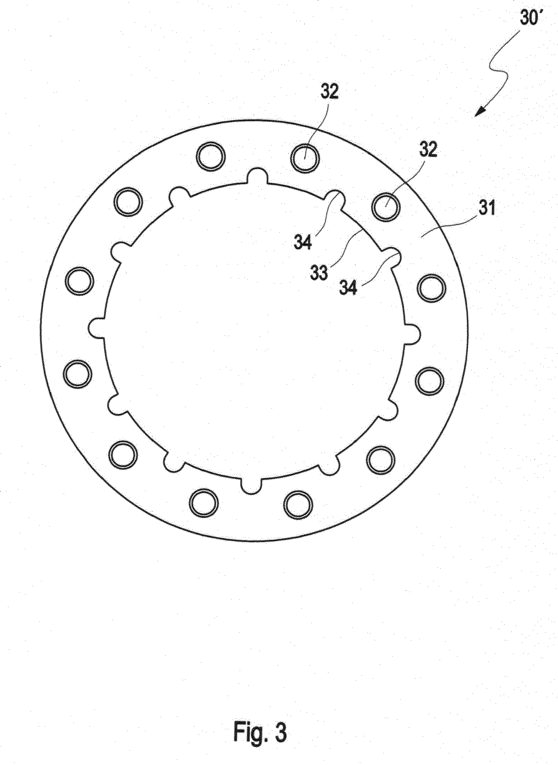

Aus der DE 202011052282U1 ist bekannt, ein Werkzeug mit einem Werkzeugaufnahmeteil mittels einzelner Niete zu verbinden. Die DE 202011052282U1 beschreibt beispielsweise ein Zubehörteil für ein Multifunktions-Schwingwerkzeug, das an einer Ausgangswelle eines Elektrowerkzeugs angebracht werden kann. Bei der in Fig. 2 und 3 dargestellten Konstruktion ist ein Anbringungsabschnitt über Niete mit einem Arbeitsabschnitt verbunden. Jede dieser Niete muss einzeln eingesetzt werden, was einen erheblichen Arbeitsaufwand darstellt (Absatz [0024]).

Die DE 202007003364 U1 offenbart einen Hohlniet, bei dem der Hals an seinem beim Einsetzen des Hohlniets zum Ausbilden eines Schließkopfes umzuformenden Ende geschlossen und an das gegenüberliegende offene Ende des Halses ein in radialer Richtung bezogen auf den Hals nach außen vorspringender Kragen als Setzkopf angeformt ist. Es können mehrere derartiger Hohlnieten mit ihren Kragen aneinandergrenzen bzw. miteinander verbunden sein.

Zweckmäßigerweise sind die bei einer solchen Konzeption miteinander verbundenen Kragen durch eine Nietplatte bereitgestellt.

Solche Nietplatten dienen zum Anschließen eines Planenspanners an den unteren Randbereich einer Plane eines Nutzfahrzeugaufbaus. Der Einsatz von Hohlnieten ist allerdings begrenzt, da diese weniger belastbar sind, als beispielsweise Vollnieten.

Aus der DE 10 2012 200 802 A1 ist ferner ein Ringniet mit einer Vielzahl von axial von einem Ringkörper des Ringniets weg verlaufenden rechteckigen Zungen bekannt, der in einen flansch mit zu den Zungen korrespondierenden Kerben einpassbar ist.

Die DE 32 16 357 A1 offenbart noch ein Kreissägeblatt sowie ein Verfahren zu seiner Herstellung, wobei eine schweißbolzenvernietung vorgeschlagen wird.

Ein Verfahren zur Herstellung einer Federanordnung ist in EP 1 493 937 A1 offenbart, wobei Federn zwischen zwei Platten eingespannt werden können.

Schließlich offenbart die CH 101 462 A noch eine sägezahnförmige Anordnung zweier Reihen von Einzelnieten.

Ausgehend von diesem diskutierten Stand der Technik liegt der Erfindung daher die Aufgabe zugrunde, zwei Materialien, die sich nicht schweißen lassen, auf rationelle Art und Weise unlösbar miteinander zu verbinden. Nach einem Aspekt der Erfindung liegt eine weitere Aufgabe darin, das Anbringen einer Vielzahl Niete zur Herstellung einer unlösbaren Verbindung eines Werkzeugs mit einem Werkzeugaufnahmeteil zu vereinfachen und somit den Arbeitsaufwand und die Fertigungskosten zu vermindern.

Diese Aufgaben werden durch die Merkmale des Patentanspruchs 1 gelöst. Weitere Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Vorgesehen ist demgemäß eine Werkzeugvorrichtung mit einem Werkzeug, das mit einem Werkzeugaufnahmeteil durch ein Bauteil formschlüssig verbunden ist, wobei das Werkzeugaufnahmeteil ausgestaltet ist, mit einer Werkzeugaufnahme eines oszillierend angetriebenen Elektrowerkzeugs zusammenzuwirken, wobei das Bauteil einen Grundkörper und eine Vielzahl von Vollnieten umfasst, die in den Grundkörper integriert sind, der als ein gemeinsamer großflächiger Setzkopf ausgeführt ist, aus dem eine Vielzahl von Nietschäften herausragen, wobei das Werkzeug und das Werkzeugaufnahmeteil miteinander fluchtende Öffnungen aufweisen, durch die die Nietschäfte ragen, und wobei die formschlüssige Verbindung des Werkzeugs mit dem Werkzeugaufnahmeteil durch Druckausübung auf die Nieten hergestellt ist.

Ein Gedanke der Erfindung ist, ein Bauteil zu schaffen, das eine Vielzahl Einzelniete zusammenfasst. Damit wird die Handhabung einer Vielzahl Einzelniete eliminiert und die Bestückung einer Nietvorrichtung wesentlich vereinfacht. Ein weiterer Vorteil des erfindungsgemäßen Bauteiles kann darin bestehen, dass eine kostengünstige Möglichkeit zur Herstellung einer formschlüssigen Nietverbindung eines Werkzeuges mit einem Werkzeugaufnahmeteil geschaffen wird.

Erfindungsgemäß sind die Niete als Vollniete ausgeführt. Das ist vorteilhaft, da Vollnieten im Vergleich zu anderen Niettypen sehr hohe Belastungen aufnehmen können und somit belastbarer sind als beispielsweise Hohlniete.

In einer vorteilhaften Ausfuhrungsform ist der Grundkörper als ein gemeinsamer großflächiger Setzkopf ausgeführt, aus dem eine Vielzahl von Nietschäften herausragt. Ein Vorteil des erfindungsgemäßen Bauteils ist die vereinfachte Handhabung, da lediglich ein einzelnes Teil zu handhaben ist und nicht eine Vielzahl Niete. Der gemeinsame Setzkopf erleichtert zudem die Bestückung einer Nietvorrichtung.

In einer weiteren vorteilhaften Ausführungsform ist der Grundkörper ringförmig ausgeführt. Diese Ausführungsform des erfindungsgemäßen Bauteils ist vorteilig für das formschlüssige Verbinden beispielsweise eines scheibenförmigen Sägeblattes oder anderer scheibenförmiger Werkzeuge mit dem Werkzeugaufnahmeteil.

In einer weiteren vorteilhaften Ausführungsform ist der Grundkörper rechteckig oder stangenförmig ausgeführt und die Niete zickzackförmig auf dem Grundkörper angeordnet. Diese Ausführungsform des erfindungsgemäßen Bauteils ist vorteilig für das formschlüssige Verbinden beispielsweise eines geraden Sägeblattes oder anderer länglicher Werkzeuge mit dem Werkzeugaufnahmeteil.

In einer weiteren vorteilhaften Ausführungsform kann das Elektrowerkzeug beispielsweise ein Multifunktionswerkzeug zum Sägen, Schleifen, Schneiden, usw. sein.

In einer weiteren vorteilhaften Ausführungsform ist das Werkzeugaufnahmeteil topfförmig ausgeführt. Die topfförmige Ausführung des Werkzeugaufnahmeteils ermöglicht das Arbeiten an schwer zugänglichen Stellen.

Ferner ist in einer weiteren Ausführungsform der Erfindung vorgesehen, dass das Bauteil als Nietring mit einer Mehrzahl von an einer inneren Wandung des Nietrings angeordneten Aussparungen vorgesehen ist. Diese Aussparungen sind vorzugsweise rotationssymmetrisch um die Mittelachse des Nietrings angeordnet. Die Aussparungen können etwa die Form Nuten besitzen und dienen dazu, den Nietring mit den übrigen beiden Teilen vor dem Nietvorgang lagerichtig zu positionieren. Sofern die Anzahl der Aussparungen der Anzahl der an dem Nietring auskragenden Niete entspricht, können die Aussparungen entsprechend zu den Nieten versetzt sein, derart, dass der Versatz von jeder Aussparung zu den beiden benachbarten Nieten gleich ist und somit ein festgelegter Minimalabstand zwischen Niet und Aussparung nicht unterschritten wird.

In einer weiteren vorteilhaften Ausführungsform umfasst das Werkzeug ein Sägeblatt, eine Schleifplatte oder eine Raspel. Das erfindungsgemäße Bauteil ist variabel gestaltbar und kann somit für ein umfangreiches Sortiment an Werkzeugen eingesetzt werden.

Vorgesehen ist weiterhin ein Verfahren zur Herstellung einer Werkzeugvorrichtung gemäß Anspruch 7, mit einer formschlüssigen Nietverbindung des Werkzeuges mit einem Werkzeugaufnahmeteil unter Verwendung eines Bauteils, das die folgenden Schritte umfasst: Zusammenfassen einer Vielzahl Niete in dem Bauteil; Zusammenstecken des Bauteiles, des Werkzeugs und des Werkzeugaufnahmeteils, sodass die Nieten durch miteinander fluchtende Öffnungen des Werkzeuges und des Werkzeugaufnahmeteils ragen; Einlegen der zusammengesteckten Einzelteile in die Aufnahme einer Nietvorrichtung; und Ausführen des Nietvorganges zur Herstellung der formschlüssigen Verbindung. Durch die Verwendung des Bauteils wird die Handhabung einer Vielzahl Einzelniete eliminiert und die Bestückung einer Nietvorrichtung wesentlich vereinfacht.

Das Bauteil in Form des Nietrings kann mittels Fließpressens hergestellt werden. Ein Stempel drückt dabei den Werkstückrohling für den Nietring, der vorzugsweise eine Aluminiumlegierung ist, in die formgebende Matrize.

Nachfolgend werden einige Ausführungsbeispiele anhand der Zeichnung näher erläutert. Es zeigen:
Figur 1: eine Einzelteildarstellung eines Werkzeugaufnahmeteils, eines Werkzeugs und eines Bauteils zur Herstellung einer formschlüssigen Nietverbindung, und
Figur 2: eine perspektivische Draufsicht des Werkzeugs mit angenietetem Werkzeugaufnahmeteil und
Figur 3: eine Draufsicht auf ein weiteres Bauteil zur Herstellung einer formschlüssigen Nietverbindung.

In den Figuren sind gleiche oder funktional gleich wirkende Bauteile mit gleichen Bezugszeichen versehen.

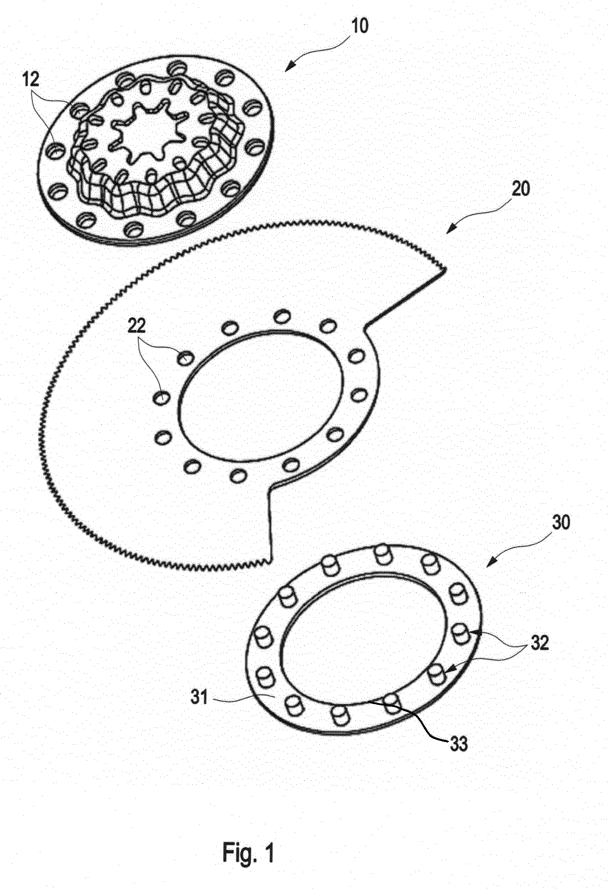

Fig. 1 zeigt ein Werkzeugaufnahmeteil 10, das dafür ausgestaltet ist, mit einer Werkzeugaufnahme eines oszillierend angetriebenen Elektrowerkzeuges (nicht weiter dargestellt) zusammenzuwirken, sowie ein Werkzeug 20, welches beispielsweise als ein Sägeblatt, eine Schleifplatte, eine Raspel oder Ähnliches ausgeführt sein kann. Entsprechend einer möglichen Ausführungsform ist das Werkzeug ein scheibenförmiges Segmentsägeblatt, wie in Fig. 1 dargestellt. Das Werkzeugaufnahmeteil 10 kann, wie in Fig. 1 und 2 dargestellt, mit einem Topf und somit gekröpft ausgeführt sein, um das Arbeiten an schwer zugänglichen Stellen zu ermöglichen oder zu erleichtern.

Das Werkzeugaufnahmeteil 10 und das Werkzeug 20 sind aus dem Stand der Technik bekannte Elemente. Das Werkzeug 20 muss unlösbar mit dem Werkzeugaufnahmeteil 10 verbunden werden, sodass es in das oszillierend angetriebene Elektrowerkzeug eingesetzt und von diesem angetrieben werden kann. Das Werkzeug 20 und das Werkzeugaufnahmeteil 10 können für bestimmte Anwendungen aus Materialien gefertigt sein, die nicht schweißbar sind, wie z. B. Federstahl, Hochleistungs-Schnellstahl oder Edelstahl.

Das oszillierend angetriebene Elektrowerkzeug kann ein übliches Multifunktionswerkzeug, beispielsweise, zum Sägen, Schneiden und Schleifen sein, welches mit einem umfangreichen Sortiment an Einsatzwerkzeugen, hier dargestellt in Form von Werkzeug 20, kooperiert. Das Werkzeugaufnahmeteil 10 ist vorzugsweise so gestaltet, dass es einen relativ schnellen und unkomplizierten Wechsel des Einsatzwerkzeugs ermöglicht.

In Fig. 1 ist weiterhin ein Bauteil 30 zur Herstellung einer formschlüssigen Nietverbindung dargestellt. Das Bauteil 30 weist einen Grundkörper 31 auf, der eine Vielzahl Niete mit Nietschäften 32 zu einem Nietverbund zusammenfasst. Der Grundkörper 31 kann als großflächiger Setzkopf ausgeführt sein, aus dem die Nietschäfte 32 herausragen. Die Nietschäfte 32 entsprechen den Nietschäften von Vollnieten, da diese im Vergleich zu anderen Nietentypen sehr hohe Belastungen aufnehmen können. Die Fläche und Form des Grundkörpers 31 wie auch die Anzahl und Anordnung der Nietschäfte 32 kann entsprechend der jeweiligen Anwendung angepasst werden. Damit ist das Bauteil 30 flexibel einsetzbar.

In einer beispielhaften Ausführung kann der Grundkörper 31 ringförmig ausgeführt sein, wie in Fig. 1 und 2 dargestellt. Dementsprechend können die Nietschäfte 32 ringförmig auf dem Grundkörper 31 angeordnet sein, so dass ein Nietring gebildet wird. Ein derartiger Nietring kann bei der Herstellung einer formschlüssigen Nietverbindung von einem scheibenförmigen Werkzeug 20, beispielsweise einem scheibenförmigen Sägeblatt, mit einem Werkzeugaufnahmeteil 10 zur Anwendung kommen.

Entsprechend einer weiteren möglichen Ausführungsform können die Einzelniete auch zu einem stangenförmigen Bauteil 30 zusammengefasst werden. Hier ist der Grundkörper 31 vorzugsweise rechteckig oder stangenförmig ausgeführt. Ein derartiges Bauteil 30 kann bei einem geraden Werkzeug 20, beispielsweise bei einem geraden Sägeblatt, zur Anwendung kommen. Auf dem rechteckigen oder stangenförmigen Bauteil 30 können die Nietschäfte 32 zickzackförmig angeordnet sein, ähnlich wie bei bekannten Schweißpunkten bei aus dem Stand der Technik bekannten punktgeschweißten Sägeblättern. Eine geradlinige Anordnung der Nietschäfte 32 auf dem stangenförmigen Bauteil 30 ist bei Bedarf auch möglich.

Vorzugsweise kann das Bauteil 30 im Ganzen aus einem Nietmaterial, beispielsweise Stahl, Edelstahl, Kupfer, Messing, Aluminiumlegierungen, Kunststoff oder Titan gefertigt werden, beispielsweise durch Fließpressen oder ähnliche Massenfertigungsverfahren. Dies führt zu einer kostengünstigen Möglichkeit der Fertigung des Bauteils 30.

Wie in Fig. 2 dargestellt, kann das Bauteil 30 zur Herstellung einer formschlüssigen Nietverbindung verwendet werden. Gezeigt ist ein Werkzeug 20 mit angenietetem Werkzeugaufnahmeteil 10. Das Bauteil 30 selbst ist in dieser Darstellung von dem Werkzeug 20 verdeckt. Entsprechend einer möglichen Ausführungsform ist das Werkzeug 20 ein scheibenförmiges Werkzeug, hier als Segmentsägeblatt eines Elektrowerkzeuges dargestellt. Dementsprechend kann in diesem Beispiel ein ringförmiges Bauteil 30 mit einem ringförmigen Grundkörper 31 und ringförmig angeordneten Nietschäften 32 zur Herstellung der formschlüssigen und damit unlösbaren Verbindung verwendet werden. Die zu verbindenden Teile, in dem dargestellten Beispiel das Werkzeug 20 und das Werkzeugaufnahmeteil 10, weisen miteinander fluchtende Öffnungen 22 bzw. 12 auf. Die Nietschäfte 32 sind fluchtend mit den Öffnungen 22 bzw. 12 auf dem Grundkörper 31 positioniert (siehe Fig. 1).

Um das Werkzeugaufnahmeteil 10 mit dem Werkzeug 20 zu vernieten, werden das Bauteil 30, das Werkzeug 20 und das Werkzeugaufnahmeteil 10 ineinander gesteckt, sodass die Nietschäfte 32 durch die Öffnungen 22 bzw. 12 ragen. Die ineinander gesteckten Teile werden in eine Nietvorrichtung gegeben. Der weitere Nietvorgang gestaltet sich wie beim Einzelnieten, wobei die Niete bzw. Nietschäfte 32 durch Druck in die Breite verformt werden, sodass jeder Nietschaft 32 einen Schließkopf bildet, wodurch das Werkzeugaufnahmeteil 10 formschlüssig mit dem Werkzeug 20 verbunden werden kann.

Die Aufnahme der Nietvorrichtung ist vorzugsweise so gestaltet, dass lediglich das Werkzeugaufnahmeteil 10 und das Bauteil 30 aufgenommen werden und die Außengeometrie des Werkzeuges 20 keinen Einfluss auf die Nietvorrichtung hat. Somit können Werkzeuge 20 verschiedenster Form und Größe auf einer Nietvorrichtung bearbeitet werden, ohne die Nietvorrichtung umzubauen.

Während das Bauteil 30 zur Herstellung einer formschlüssigen Nietverbindung am Beispiel eines Elektrowerkzeuges beschrieben worden ist, so sind die Anwendungsmöglichkeiten des Bauteiles 30 jedoch nicht auf diesen Anwendungsbereich beschränkt.

Fig. 3 zeigt schließlich ein weiteres Bauteil 30', dass sich insbesondere durch zwölf rotationssymmetrisch an einer inneren Wandung 33 des Grundkörpers des Bauteils angeordnete Aussparungen 34 von dem zuvor gezeigten Bauteil 30 unterscheidet. Mithilfe der Aussparungen 34 lässt sich das Bauteil zur Verbindung mit dem Werkzeug 20 und dem Werkzeugaufnahmeteil 10 lagerichtig positionieren, d.h. insbesondere eine definierte Winkellage zwischen den genannten Teilen erreichen.

Gleichwohl in der vorangegangenen Beschreibung einige mögliche Ausführungen der Erfindung offenbart wurden, versteht es sich, dass zahlreiche weitere Varianten von Ausführungen durch Kombinationsmöglichkeiten aller genannten und ferner aller dem Fachmann naheliegenden technischen Merkmale und Ausführungsformen existieren. Es versteht sich ferner, dass die Ausführungsbeispiele lediglich als Beispiele zu verstehen sind, die den Schutzbereich, die Anwendbarkeit und die Konfiguration in keiner Weise beschränken. Vielmehr möchte die vorangegangene Beschreibung dem Fachmann einen geeigneten Weg aufzeigen, um zumindest eine beispielhafte Ausführungsform zu realisieren. Es versteht sich. dass bei einer beispielhaften Ausführungsform zahlreiche Änderungen bezüglich Funktion und Anordnung der Elemente vorgenommen werden können, ohne den in den Ansprüchen offenbarten Schutzbereich zu verlassen.

### Bezugszeichenliste

- 10: Werkzeugaufnahmeteil
- 12: Öffnung
- 20: Werkzeug
- 22: Öffnung
- 30, 30': Bauteil zur Herstellung einer formschlüssigen Nietverbindung
- 31: Grundkörper
- 32: Nietschäfte
- 33: Wandung
- 34: Aussparung

## Patentansprüche

1. Werkzeugvorrichtung mit einem Werkzeug (20), das mit einem Werkzeugaufnahmeteil (10) durch ein Bauteil (30, 30') formschlüssig verbunden ist, wobei das Werkzeugaufnahmeteil (10) ausgestaltet ist, mit einer Werkzeugaufnahme eines oszillierend angetriebenen Elektrowerkzeugs zusammenzuwirken, wobei das Bauteil (30, 30') einen Grundkörper (31) und eine Vielzahl von Vollnieten (32) umfasst, die in den Grundkörper integriert sind, der als ein gemeinsamer großflächiger Setzkopf ausgeführt ist, aus dem eine Vielzahl von Nietschäften (32) herausragen, wobei das Werkzeug (20) und das Werkzeugaufnahmeteil (10) miteinander fluchtende Öffnungen (12, 22) aufweisen, durch die die Nietschäfte (32) ragen, und wobei die formschlüssige Verbindung des Werkzeugs (20) mit dem Werkzeugaufnahmeteil (10) durch Druckausübung auf die Nieten (32) hergestellt ist.

2. Werkzeugvorrichtung nach Anspruch 1, wobei der Grundkörper (31) ringförmig ausgeführt ist.

3. Werkzeugvorrichtung nach Anspruch 1, wobei der Grundkörper (31) rechteckig oder stangenförmig ausgeführt ist.

4. Werkzeugvorrichtung nach Anspruch 3, wobei die Niete (32) zickzackförmig auf dem rechteckig oder stangenförmig ausgeführten Grundkörper (31) angeordnet sind.

5. Werkzeugvorrichtung nach einem der vorgenannten Ansprüche, wobei das Werkzeugaufnahmeteil (10) topfförmig ausgeführt ist.

6. Werkzeugvorrichtung nach einem der vorgenannten Ansprüche, wobei das Werkzeug (20) ein Sägeblatt, eine Schleifplatte oder eine Raspel umfasst.

7. Verfahren zur Herstellung einer Werkzeugvorrichtung nach Anspruch 1, bei dem ein Werkzeug (20) mit einer formschlüssigen Nietverbindung mit einem Werkzeugaufnahmeteil (10) unter Verwendung eines Bauteils (30, 30') verbunden werden, umfassend:
- Zusammenstecken des Bauteils (30, 30'), des Werkzeugs (20) und des Werkzeugaufnahmeteils (10), derart, dass die Niete (32) durch die miteinander fluchtenden in Steckrichtung hintereinanderliegenden Öffnungen (22, 12) des Werkzeuges (20) und des Werkzeugaufnahmeteils (10) ragen;
- Einlegen der zusammengesteckten Einzelteile in die Aufnahme einer Nietvorrichtung; und
- Ausführen des Nietvorganges zur Herstellung der formschlüssigen Verbindung.

## Claims

1. Tool device comprising a tool (20), which is connected to a tool holder part (10) in a positive-locking manner by a component (30, 30'), wherein the tool holder part (10) is configured to interact with a tool holder of an oscillating driven electric tool, wherein the component (30, 30') comprises a main body (31) and a plurality of solid rivets (32) which are integrated into the main body, which is designed as a common large-scale setting head, from which a plurality of the rivet shafts (32) protrude, wherein the tool (20) and the tool holder part (10) have openings (12, 22) that are aligned with one another, through which the rivet shafts (32) protrude, and wherein the positive-locking connection of the tool (20) with the tool holder part (10) is produced by exerting pressure on the rivets (32).

2. Tool device according to claim 1, wherein the main body (31) is designed to be annular.

3. Tool device according to claim 1, wherein the main body (31) is designed to be rectangular or rod-shaped.

4. Tool device according to claim 3, wherein the rivets (32) are arranged in a zigzag manner on the main body (31) designed to be rectangular or rod-shaped.

5. Tool device according to any of the preceding claims, wherein the tool holder part (10) is designed to be cup-shaped.

6. Tool device according to any of the preceding claims, wherein the tool (20) comprises a saw blade, a grinding plate or a rasp.

7. Method for producing a tool device according to claim 1, wherein a tool (20) can be connected by a positive-locking rivet connection to a tool holder part (10) using a component (30, 30') comprising:
- plugging together the component (30, 30'), the tool (20) and the tool holder part (10), such that the rivets (32) protrude through the openings (22, 12) of the tool (20) and the tool holder part (10), the openings being aligned sequentially in plugging direction;
- inserting the plugged together individual parts into the holder of a riveting device and
- performing the riveting process to produce the positive-locking connection.

## Revendications

1. Dispositif d'outil avec un outil (20) qui est relié par complémentarité de forme à une partie formant logement d'outil (10) par un composant (30, 30'), la partie formant logement d'outil (10) étant conçue pour coopérer avec un logement d'outil d'un outil électrique à entraînement oscillant, le composant (30, 30') comprenant un corps de base (31) et une pluralité de rivets pleins (32) qui sont intégrés dans le corps de base, qui est conçu comme une tête de pose commune de grande surface, de laquelle font saillie une pluralité de tiges de rivet (32), l'outil (20) et la partie formant logement d'outil (10) présentant des ouvertures (12, 22) alignées entre elles, à travers lesquelles les tiges de rivet (32) font saillie, et la liaison par complémentarité de forme de l'outil (20) avec la partie formant logement d'outil (10) étant réalisée par pression sur les rivets (32).

2. Dispositif d'outil selon la revendication 1, dans lequel le corps de base (31) est de forme annulaire.

3. Dispositif d'outil selon la revendication 1, dans lequel le corps de base (31) est rectangulaire ou en forme de barre.

4. Dispositif d'outil selon la revendication 3, dans lequel les rivets (32) sont disposés en zigzag sur le corps de base (31) rectangulaire ou en forme de tige.

5. Dispositif d'outil selon l'une quelconque des revendications précédentes, dans lequel la partie formant logement d'outil (10) est en forme de pot.

6. Dispositif d'outil selon l'une quelconque des revendications précédentes, dans lequel l'outil (20) comprend une lame de scie, une plaque abrasive ou une râpe.

7. Procédé de fabrication d'un dispositif d'outil selon la revendication 1, dans lequel un outil (20) est relié par complémentarité de forme à une partie formant logement d'outil (10) par un joint riveté en utilisant un composant (30, 30'), comprenant les étapes consistant à :
- assembler le composant (30, 30'), l'outil (20) et la partie formant logement d'outil (10) de sorte que les rivets (32) traversent dans le sens de l'assemblage les ouvertures (22, 12) alignées entre elles les unes derrière les autres de l'outil (20) et de la partie formant logement d'outil (10) ;
- insérer des pièces individuelles assemblées dans le logement d'un dispositif de rivetage ; et
- effectuer le processus de rivetage pour créer la liaison par complémentarité de forme.
